(19) Europäisches Patentamt
European Patent Office
Office européen des brevets

(11)  EP 4 335 580 B1

(12)  **EUROPEAN PATENT SPECIFICATION**

(45) Date of publication and mention
of the grant of the patent:
**01.10.2025 Bulletin 2025/40**

(51) International Patent Classification (IPC):
***B23K 9/04*** (2006.01)   ***B23K 31/00*** (2006.01)

(21) Application number: **22824770.6**

(52) Cooperative Patent Classification (CPC):
**B23K 9/04; B23K 31/125;** Y02P 10/25

(22) Date of filing: **26.05.2022**

(86) International application number:
**PCT/JP2022/021659**

(87) International publication number:
**WO 2022/264776 (22.12.2022 Gazette 2022/51)**

(54) **METHOD FOR CREATING ADDITION PLAN**

VERFAHREN ZUR ERSTELLUNG EINES ADDITIONSPLANS

PROCÉDÉ DE CRÉATION D'UN PLAN D'ADDITION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2021 JP 2021100439**

(43) Date of publication of application:
**13.03.2024 Bulletin 2024/11**

(73) Proprietor: **KABUSHIKI KAISHA KOBE SEIKO
SHO (KOBE STEEL, LTD.)
Hyogo 651-8585 (JP)**

(72) Inventors:
• **SATO, Shinji**
**Kobe-shi, Hyogo 651-2271 (JP)**
• **IMASHIRO, Takanori**
**Kobe-shi, Hyogo 651-2271 (JP)**

(74) Representative: **Müller-Boré & Partner
Patentanwälte PartG mbB
Friedenheimer Brücke 21
80639 München (DE)**

(56) References cited:
JP-A- 2016 511 697     JP-A- 2020 192 605
JP-A- 2020 192 605     JP-A- S55 126 370
JP-A- S60 121 094

**Description**

TECHNICAL FIELD

The present invention relates to an additive manufacturing method

BACKGROUND ART

In recent years, there has been an increasing need for manufacturing using a 3D printer as a production method, and research and development have been advanced toward practical use of manufacturing using a slab metal material. A 3D printer that manufactures a slab metal material uses a heat source such as a laser, an electron beam, and an arc to melt a metal powder or a metal wire and deposits the molten metal to produce a manufactured object.

However, on a surface of a weld bead formed as described above, an impurity such as slag generated by a reaction between a deoxidizing material and oxygen is generated, and when the weld bead is further deposited on the impurity, arc instability increases, and poor welding due to inclusion of the impurity also occurs. The inclusion of the impurity is a phenomenon in which an oxide is confined in a molten metal and is solidified, and since a bonding strength between an impurity and a metal is small, a strength and durability of an additively manufactured object are reduced.

A technique for removing such impurity generated during welding is disclosed in, for example, Patent Literature 1. In Patent Literature 1, a method is adopted in which, when a manufactured object is produced by depositing weld beads, a weld bead depositing process and an impurity removal process are repeated for manufacturing.

CITATION LIST

PATENT LITERATURE

   Patent Literature 1: JP2019-84553A

   Patent Literature 2 : JP S60 121094 A SUMMARY OF INVENTION

TECHNICAL PROBLEM

However, in the method in Patent Literature 1, the weld bead depositing process and the impurity removal process are treated as one unit process, and the unit process is repeated. In this way, when the impurity is removed each time the weld beads are deposited, a time for an impurity removal operation is cumulatively increased, and productivity is reduced. On the other hand, in a case in which the impurity removal operation is not performed at all, the impurity such as slag may be incorporated into a metal layer, deteriorating quality of the manufactured object.

Patent Literature 2 discloses that laser light, conducted from a laser oscillator, is condensed by a lens and is irradiated to slag. The slag is melted by the laser energy or is cracked by thermal stress. A compressed gas is blown from a nozzle at the same time of irradiation of the laser light, the molten or cracked slag is blown off from the trough between the beads.

It is difficult to evaluate a degree of cumulative adhesion of impurity such as slag, and it is difficult to determine a relation between a frequency of slag removal and a defect occurrence. For example, although an area of the impurity can be detected, an area value of the impurity is immediately saturated when deposited, and it is difficult to evaluate the degree of the cumulative adhesion only by this. Further, the same applies to a thickness of the impurity. For example, even when an electrical resistivity of the surface of the weld bead is measured, the measured value greatly varies. Therefore, it is difficult to directly measure the impurity at a welding site, and there is a problem that it is difficult to determine a criterion for determining whether to perform or omit the impurity removal process.

An object of the invention is to provide an additive manufacturing method capable of omitting an unnecessary impurity removal process and improving productivity without deteriorating quality of a manufactured object.

SOLUTION TO PROBLEM

The invention includes the following configuration.

An additive manufacturing method for producing a manufactured object by depositing weld beads formed by melting and solidifying a filler metal, the method including:

a bead formation process of forming a bead layer in which the weld beads are arranged,

an impurity identification process of identifying a region where an impurity is generated on a surface of the bead layer formed in the bead formation process, and

a thickness estimation process of estimating a thickness of the impurity in the region identified in the impurity identification process; in which

the bead formation process, the impurity identification process and the thickness estimation process are repeatedly performed, and

a removal process, in which the impurity is removed from the surface of the bead layer, is selectively performed after performing the thickness estimation process based on the estimated thickness of the impurity.

ADVANTAGEOUS EFFECTS OF INVENTION

According to the invention, an unnecessary impurity removal process can be omitted, and productivity can be improved without deteriorating quality of a manufactured object.

BRIEF DESCRIPTION OF DRAWINGS

[Fig. 1] Fig. 1 is an overall configuration diagram of an additive manufacturing system for producing a manufactured object.
[Fig. 2] Fig. 2 is a functional block diagram of a controller.
[Fig. 3] Fig. 3 is a flowchart illustrating a procedure of an additive manufacturing method for producing a manufactured object.
[Fig. 4] Fig. 4 is an explanatory table illustrating an image and a binarized image of each bead layer of repeatedly deposited weld beads, and a measurement example of an area ratio in each bead layer.
[Fig. 5] Fig. 5 is a graph illustrating transition examples of an area ratio of an impurity and a thickness ratio of the impurity calculated by image processing.

DESCRIPTION OF EMBODIMENTS

Hereinafter, an embodiment of the invention will be described in detail with reference to the drawings.
In an additive manufacturing method according to the present embodiment, when a manufactured object is produced by depositing weld beads formed by melting and solidifying a filler metal, an impurity generated in the weld bead is removed at an appropriate timing, thereby improving productivity without deteriorating quality of the manufactured object.

<Configurations of Additive Manufacturing Apparatus and Impurity Removal Apparatus>

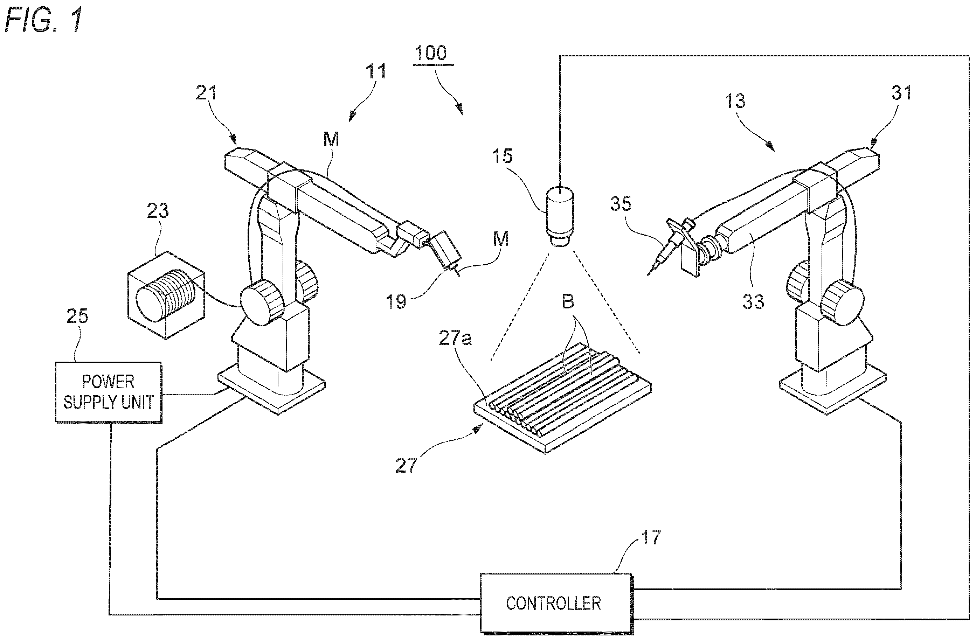

Fig. 1 is an overall configuration diagram of an additive manufacturing system for producing the manufactured object.
An additive manufacturing system 100 includes an additive manufacturing apparatus 11, an impurity removal apparatus 13, a surface measurement unit 15, and a controller 17 that performs overall control of the units described above.
The additive manufacturing apparatus 11 includes a welding robot 21 that includes a torch 19 on a tip shaft of the welding robot 21, a filler metal feeding unit 23 that feeds a filler metal (welding wire) M to the torch 19, and a power supply unit 25. The torch 19 holds the filler metal M in a state of protruding from a tip.
The welding robot 21 is an articulated robot, and the filler metal M is supported by the torch 19 provided on the tip shaft so as to be continuously fed. A position and an orientation of the torch 19 can be set three-dimensionally and freely within a range of degrees of freedom of a robot arm.
The torch 19 includes a shield nozzle (not illustrated), and a shield gas is fed from the shield nozzle. An arc welding method used in this configuration may be any one of a consumable electrode type such as coated arc welding or carbon dioxide gas arc welding and a non-consumable electrode type such as TIG welding or plasma arc welding, and is appropriately selected according to an additively manufactured object to be produced.
For example, in a case of the consumable electrode type, a contact tip is disposed inside the shield nozzle, and the filler metal M to which a melting current is supplied is held by the contact tip. The torch 19 generates an arc from the tip of the filler metal M in a shield gas atmosphere while holding the filler metal M. The filler metal M is fed from the filler metal feeding unit 23 to the torch 19 by a feeding mechanism (not illustrated) attached to the robot arm or the like. Further, when the continuously fed filler metal M is melted and solidified while moving the torch 19, a linear weld bead B, which is a molten and solidified body of the filler metal M, is formed on a base material 27.

A heat source for melting the filler metal M is not limited to the arc described above. For example, a heat source according to another method such as a heating method using both an arc and a laser, a heating method using plasma, or a heating method using an electron beam or a laser may be adopted.

Any commercially available welding wire can be used as the filler metal M. For example, wires defined by solid wires for MAG welding and MIG welding of mild steel, high tensile strength steel, and low temperature service steel (JIS Z 3312), flux-cored wires for arc welding of mild steel, high tensile strength steel, and low temperature service steel (JIS Z 3313), or the like can be used.

The additive manufacturing apparatus 11 including the configuration described above moves the torch 19 according to a predetermined additive manufacturing plan by driving the welding robot 21, and melts the filler metal M at the tip of the torch 19 to form the weld bead B.

The impurity removal apparatus 13 includes a general-purpose robot 31. The general-purpose robot 31 is an articulated robot similar to the welding robot 21, and a removal tool 35 is attached to a tip portion of a tip arm 33. In the general-purpose robot 31, a position and an orientation of the removal tool 35 can be set three-dimensionally and freely within a range of degrees of freedom of the tip arm 33 according to a command from the controller 17.

The general-purpose robot 31 removes an impurity such as slag generated in the weld bead B deposited on the base material surface 27a by the additive manufacturing apparatus 11 using the removal tool 35. Examples of the removal tool 35 include, but are not limited to, a chisel member (chipper) including a bundle of multi-core wire members each having a flat or curved convex tip. Further, if the impurity is easy to peel off, an air blower may be used or used in combination.

Above the base material 27, the surface measurement unit 15 that measures a surface of the deposited weld bead B (bead layer) is disposed. The surface measurement unit 15 may be, for example, an imaging camera that images the surface of the weld bead B, or may be another measurement device. In a case of the imaging camera, obtained image information is input to the controller 17. Further, the surface measurement unit 15 may be provided with accessory equipment used for measurement such as an illumination optical system (not illustrated).

Further, the surface measurement unit 15 is fixed to an appropriate frame member (not illustrated), but is not limited thereto, and may be attached to the general-purpose robot 31 or the welding robot 21.

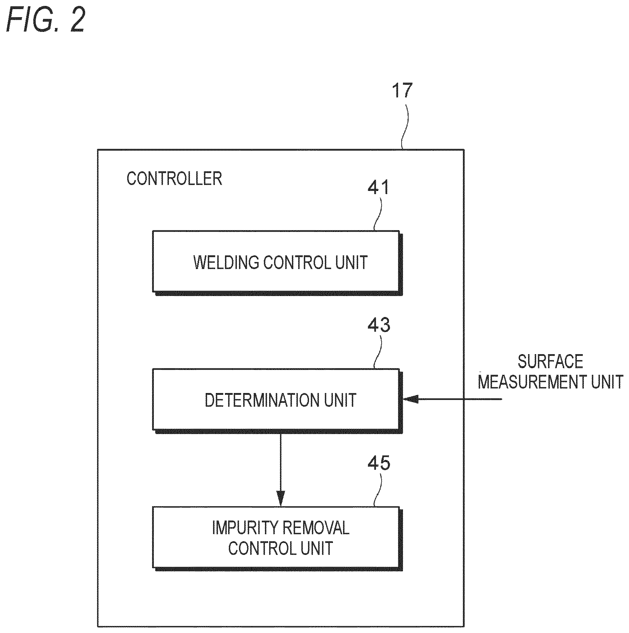

Fig. 2 is a functional block diagram of the controller 17.

The controller 17 includes a welding control unit 41, a determination unit 43, and an impurity removal control unit 45.

The welding control unit 41 drives the additive manufacturing apparatus 11 according to a predetermined additive manufacturing plan such as a movement trajectory of the torch 19 and a welding current to form a weld bead.

The determination unit 43 uses an output signal output by the surface measurement unit 15 by measuring the formed surface of the weld bead, and outputs, to the impurity removal control unit 45 at a predetermined timing described later in detail, a trigger signal for driving the impurity removal apparatus 13.

The impurity removal control unit 45 drives the impurity removal apparatus 13 to remove the impurity on the surface of the weld bead when receiving an input of the trigger signal from the determination unit 43.

Here, the impurity means a foreign matter generated on and around the surface of the weld bead, which causes a weld defect. Specific examples of the impurity include slag, a spatter, and fume deposit. In particular, since the remaining slag in the weld bead greatly affects the weld defect, it is necessary to reliably prevent the remaining slag.

<Procedure of Additive Manufacturing Method>

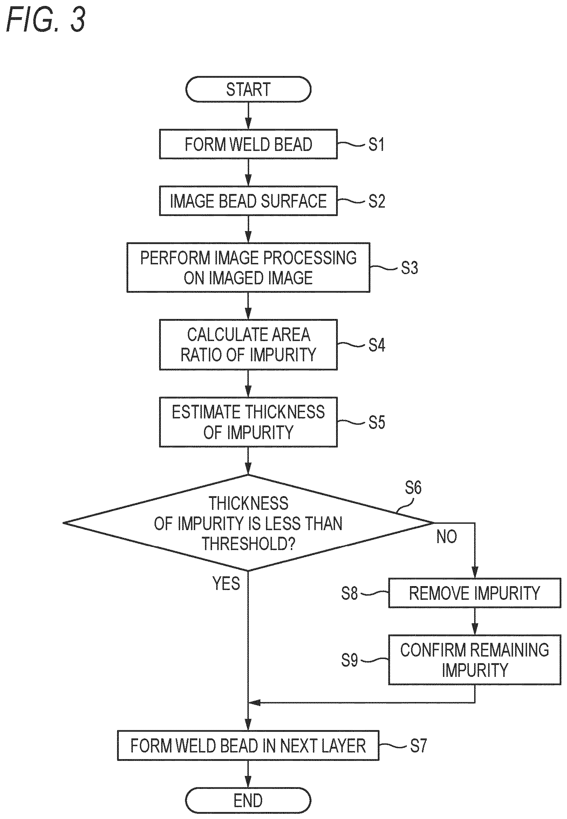

Fig. 3 is a flowchart illustrating a procedure of the additive manufacturing method for producing a manufactured object.

The controller 17 drives the welding robot 21 according to a predetermined depositing plan. That is, the welding robot 21 moves the torch 19 while melting the filler metal M by the arc according to the movement trajectory of the torch 19 based on the depositing plan according to the command from the controller 17. Accordingly, the weld bead B is formed along the movement trajectory of the torch 19 (S1: bead depositing process).

Next, the controller 17 causes the surface measurement unit 15 to measure the impurity on the bead surface of the formed weld bead B. Specifically, the surface measurement unit 15 images the bead surface and outputs the image of the bead surface to the controller 17 (S2).

The controller 17 performs image processing on the input image to identify a region of impurity generated on the imaged bead surface (S3). In the image processing in this case, for example, by performing binarization processing on a luminance difference of an image caused by a difference in surface properties between an impurity and a bead base metal (metal surface), an impurity region and a bead base metal region are distinguished. In addition to the binarization processing, for example, a segmentation technique using deep learning may be used, and the technique is not particularly limited.

Further, the controller 17 calculates an area ratio of the impurity from a pixel corresponding to the impurity region obtained by the binarization processing (S4).

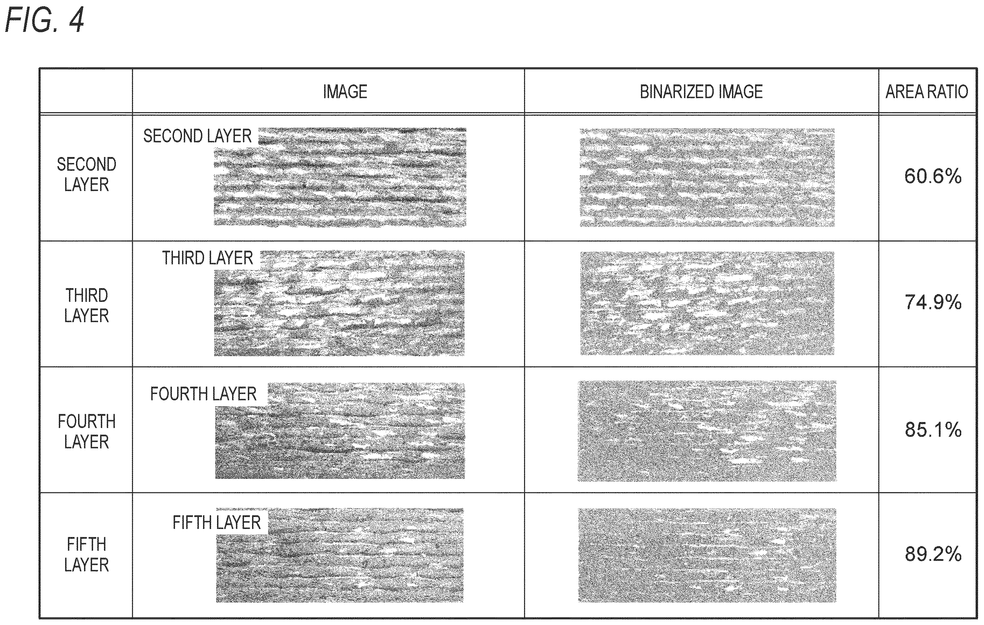

Fig. 4 is an explanatory table illustrating an image and a binarized image of each bead layer of repeatedly deposited weld beads, and a measurement example of an area ratio of each bead layer.

Here, the area ratio is a ratio of the impurity region to an entire image region, and a larger value means a larger area of the impurity. As illustrated in Fig. 4, as the number of layers to be deposited increases, the impurity accumulates in the layers, and thus the impurity increases as the number of layers increases.

Next, the thickness of the impurity is estimated from the obtained area ratio of the impurity by a method described later (S5), and if the estimated thickness of the impurity is less than a preset threshold as compared with the threshold (S6), even if the impurity remains in the bead layer, a probability of a defect occurrence is expected to be low, and thus the weld bead in a next layer is formed (S7). If the estimated thickness of the impurity is equal to or more than the threshold, the defect occurrence due to the remaining impurity is predicted, and thus the impurity is removed from the bead layer (S8). After the removal of the impurity in S8, a remaining amount of the impurity is detected to verify an extent to which the impurity has been removed (S9), which will be described later in detail (S9), and formation of the weld bead in the next layer in S7 is performed.

The above processing is repeated until the formation of all the bead layers necessary for producing the manufactured object is completed.

According to the procedure described above, a plurality of bead layers can be deposited while removing the impurity on the surface of the bead layer at an appropriate timing such that the impurity does not excessively remain. As a result, a high-quality manufactured object can be obtained in which no welding defect remains inside and a decrease in strength is prevented.

<Estimation of Thickness of Impurity>

Here, a procedure for estimating the thickness of the impurity will be described in detail below.

In depositing in a first layer, when a volume of the impurity to be accumulated (impurity accumulation amount) is defined as V, an area of the impurity to be generated is defined as $A_1$, and a thickness of the impurity is defined as $t_1$, the volume V of the impurity can be expressed by Equation (1).

$$V = A_1 \times t_1 ...(1)$$

In depositing in a second layer, the volume of the impurity to be accumulated is twice the volume of the impurity in the first layer (2V), and when the area of the impurity is $A_2$ and the thickness of the impurity is $t_2$, the volume of the impurity to be accumulated can be expressed by Equation (2).

$$2V = A_2 \times t_2 ...(2)$$

Based on Equation (1) and Equation (2), the thickness $t_2$ of the impurity in the second layer can be obtained by Equation (3).

$$t_2 = 2V/A_2 = 2(A_1/A_2) \times t_1 ...(3)$$

That is, the thickness $t_2$ of the impurity in the second layer is $2A_1/A_2$ times the thickness $t_1$ of the impurity in the first layer. Such $2A_1/A_2$ is defined as a thickness ratio $\alpha_2$ of the impurity in the second layer. Similarly, the thicknesses of impurity in the subsequent deposited layers can be estimated by calculation using a thickness ratio $\alpha_i$ of the impurity in each layer (i-th layer). As described above, although a strict value cannot be calculated, it is easy to evaluate in real time by obtaining an index serving as a reference of the thickness of the impurity.

For example, the thickness $t_i$ of the impurity in the i-th layer (i is an integer of 2 or more) in the middle of depositing can be expressed by Expression (4) using a thickness $t_k$ of the impurity in a k-th layer (for example, k = 1).

$$t_i = \alpha_i \times t_k ...(4)$$

When an impurity generated on the surface of the bead layer is removed in the i-th layer, an area of the impurity in the i-th layer is defined as $A_i$, and an area of the impurity remaining after removing the impurity is defined as $A_m$. Further, when a (i + 1)-th bead layer is deposited after the impurity is removed, an area of the impurity in the (i + 1)-th layer is defined as $A_{i+1}$, and the thickness of the impurity is defined as $t_{i+1}$.

An accumulation amount $V_{i+1}$ of the impurity in the (i + 1)-th layer is expressed by Equation (5), in which an impurity of new one layer ($A_1 \times t_1$) is added in addition to an impurity ($\alpha_i \times t_i \times A_m$) remaining after the impurity in the i-th layer is removed.

$$V_{i+1} = A_{i+1} \times t_{i+1}$$

$$= (\alpha_i \times t_k \times A_m) + (A_1 \times t_1)...(5)$$

Based on Equation (5), the thickness $t_{i+1}$ of the impurity in the (N + 1)-th layer can be expressed by Equation (6).

$$t_{i+1} = (\alpha_i \times t_k \times A_m + A_1 \times t_1)/A_{i+1}...(6)$$

That is, $\{(\alpha_i \times t_k \times A_m + A_1 \times t_1)/A_{i+1}\}/t_1\}$ is a thickness ratio $\alpha_{i+1}$ of the impurity in the (i + 1)-th layer.

An example of estimating the thicknesses $t_i$ of the impurity in each layer in this manner is illustrated in Table 1.

Table 1 schematically illustrates an estimated value of a thickness of the impurity generated in each layer in a case in which the weld bead layers are sequentially deposited up to 1 to 3 layers, the impurity generated in the third bead layer is removed, and then the fourth bead layer is deposited. The volume if each bead layer is the same.

[Table 1]

Table 1

| Process | Approximate volume of impurity $V_i$ | Area of impurity $A_i$ | Estimated value of thickness of impurity $t_i$ | Thickness ratio $\alpha_i$ of impurity |
|---|---|---|---|---|
| First layer | impurity accumulation amount in first layer × 1 | 0.30 × $A_0$ | Impurity accumulation amount in first layer × 1/(0.30 × $A_0$) | 1 |
| Second layer | Impurity accumulation amount in first layer × 2 | 0.36 × $A_0$ | Impurity accumulation amount in first layer × 2/(0.36 × $A_0$) | 2 × 0.3010.36 |
| Third layer | Impurity accumulation amount in first layer × 3 | 0.40 × $A_0$ | Impurity accumulation amount in first layer × 3/(0.40 × $A_0$) | 3 × 0.30/0.40 |
| Impurity removal | 0.10 × (Impurity accumulation amount in first layer × 3/(0.40)} | 0.10 × $A_0$ | Impurity accumulation amount in first layer × 3/(0.40 × $A_0$) | 3 × 0.3010.40 |
| Fourth layer | Impurity accumulation amount in first layer × 1 + 0.10 × {impurity accumulation amount in first layer × 3/(0.40)} | 0.32 × $A_0$ | [Impurity accumulation amount in first layer × 1 + 0.10 × (impurity accumulation amount in first layer × 3/(0.40)}] 1(0.32 × $A_0$) | {1 + 0.1 × (3/0.40)} × (0.30/0.32) |

In the first bead layern the impurity is generated at a specific ration according to the volume of the weld bead or the like. The volume of the impurity in the first layer is defined as a reference volume $V_1$.

Further, the impurity is present on the surface of the first bead layer at an area ratio of 30%, for example. When a total area of an image obtained by imaging a bead layer is defined as $A_0$, and an area occupied by the impurity in the image is defined as $A_1$, the area ratio can be expressed by $A_1/A_0 \times 100\%$. In this case, the thickness $t_1$ of the impurity in the first layer is estimated to be a value obtained by dividing the volume $V_1$ of the impurity generated in the bead layer in one layer by the area ratio (= impurity accumulation amount in first layer × 1/(0.30/$A_0$)). At this time, the thickness ratio $\alpha_1$ of the impurity is defined as 1 as a reference.

Since the impurity in the first layer are formed on an upper surface of the bead layer, the impurity is taken into the second layer again when the second bead layer is formed, and are accumulated on an upper surface of the second layer. That is, the volume $V_2$ of the impurity in the second layer is approximately twice the volume $V_1$ of the impurity in the first layer. However, impurity generation areas in the first layer and the second layer are not the same. Therefore, the area ratio is used for a correction here.

When the first layer and the second layer are successively deposited, an area of the impurity in the second layer is larger than an area of the impurity in the first layer, and thus an area ratio of the impurity in the second bead layer is larger than a reference area ratio in the first layer. Here, as a result of the measurement, the area of the impurity in the second layer is increased to 1.2 times that in the first layer (a measurement result of the area ratio of the impurity is 36%). In this case, the thickness $t_2$ of the impurity in the second layer is estimated to be a value obtained by dividing an approximate sum of the impurity in the first layer and the second layer by the area ratio of the impurity in the second layer (= impurity accumulation amount in first layer $\times$ 2/($0.36 \times A_0$). At this time, the thickness ratio $\alpha_2$ of the impurity corresponding to a ratio of $t_2$ to $t_1$ is $2 \times 0.30/0.36$.

Similarly, a thickness $t_3$ of the impurity in a third layer is estimated to be the impurity accumulation amount in the first layer $\times$ 3/($0.40 \times A_0$) (a measurement result of the area ratio of the impurity is 40%). At this time, a thickness ratio $\alpha_3$ of the impurity corresponding to a ratio of $t_3$ to $t_1$ is $3 \times 0.30/0.40$.

Here, assuming that the thickness $t_3$ of the impurity in the third layer exceeds a predetermined threshold, removal processing of the impurity is performed after the third bead layer is deposited, and 90% of the deposited layer area of the impurity existing in the third layer is removed. That is, a remaining area ratio of the impurity is 10%. In this case, the thickness of the remaining slag remains unchanged at $t_3$.

Next, a fourth bead layer is formed on the third bead layer subjected to the impurity removal processing (a measurement result of the area ratio of the impurity is 32%). The fourth bead layer includes an impurity remaining up to the third layer and an impurity in a new layer (= 1). Further, the area ratio of the impurity is an area ratio corresponding to a total volume of the impurity remaining up to the third layer and the impurity of the new layer.

In this way, a volume $V_4$ of the impurity on a four-layer surface is estimated by Equation (7).

$$V_4 = \text{impurity accumulation amount in first layer} \times 1 + 0.10 \times \{\text{impurity accumulation amount in first layer} \times 3 (0.40)\} \tag{7}$$

A second term on a right side of Equation (7) represents a remaining impurity amount after the impurity is removed, and a first term on the right side represents an increased amount of impurity due to a newly deposited weld bead. Further, when the thickness ratio of the impurity in the fourth layer is defined as $\alpha_4$, the thickness $t_4$ of the impurity can be expressed as follows:

$$t_4 = [\text{impurity accumulation amount in first layer} \times 1 + 0.10 \times \{\text{impurity accumulation amount in first layer} \times 3/(0.40)\}]/ (0.32 \times A_0).$$ At this time, the thickness ratio $\alpha_4$ of the impurity corresponding to a ratio of $t_4$ to $t_1$ is $\{1 + 0.1 \times (3/0.40)\} \times (0.30/0.32)$.

That is, considering an area occupied by the impurity in a previous layer remaining after the impurity is removed and a thickness of the impurity in the previous layer, a thickness of the impurity currently observed can be estimated by Equation (8). The area in Equation (8) may be an area ratio without using an absolute value of the area.

$$\text{thickness of impurity} = (\text{area of remaining impurity} \times \text{thickness of impurity in previous layer} + \text{area of impurity in initial layer} \times \text{unit thickness}) \div (\text{area of impurity in surface layer}) \tag{8}$$

<Example of thickness transition of Impurity during Additive Manufacturing>

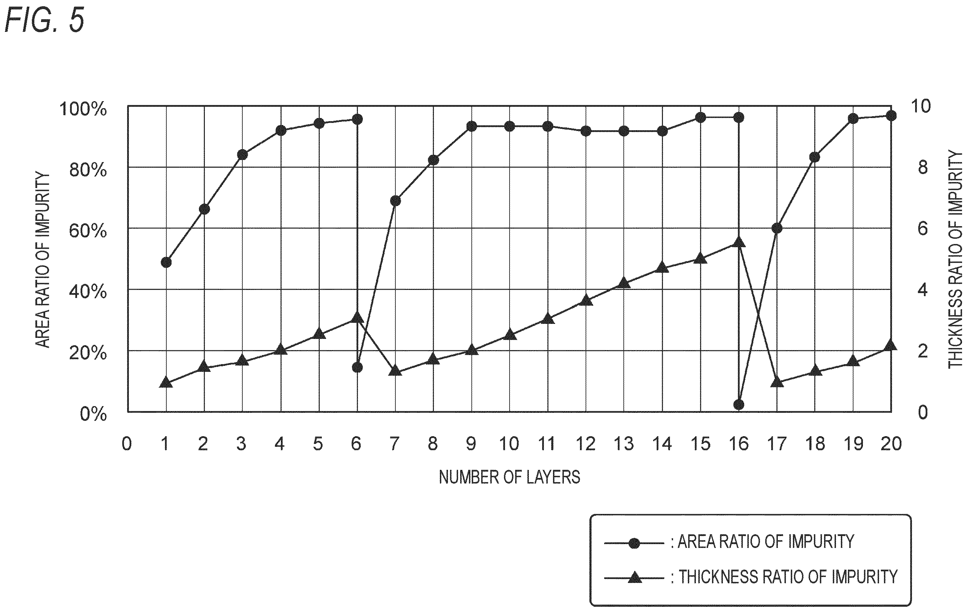

Fig. 5 is a graph illustrating transition examples of an area ratio of the impurity and a thickness ratio of the impurity calculated by the image processing. In the impurity thickness ratio here, the thickness of impurity in the first layer is a unit thickness.

According to Fig. 5, it can be seen that as the bead layer is deposited, the thickness ratio of the impurity tends to increase at a constant ratio.

It is preferable that to experimentally obtain a threshold, which is a criterion for determining whether to perform an impurity removal process. For example, based on the estimated thickness value of the impurity, a limit number of layers in which defects occur due to inclusion of the impurity or the like is experimentally obtained in advance. The limit number of layers obtained by an experiment can be regarded as a limit value that allows non-removal of impurity. Here, the thickness ratio of impurity corresponding to the limit number of layers is set as a threshold. Further, in order to set the threshold on a safe side, it is preferable to lower the threshold by multiplying the threshold by a numerical value such as a safety factor. The threshold set in this manner is compared with an actually predicted thickness ratio of impurity.

In Fig. 5, the impurity removal process is performed when a sixth bead layer is formed and when a sixteenth bead layer is formed.

For example, when the threshold of the thickness ratio of the impurity is set to 5, 7 to 16 layers are continuously deposited, and the thickness ratio of the impurity in the sixteenth layer exceeds 5, and thus the impurity removal process is performed on the sixteenth layer. Further, when a safety factor of 1.25 times is added to the threshold of 5, a slag thickness ratio 4 (= 5/1.25) is a new threshold.

The present application is based on a Japanese Patent Application (Patent Application No. 2021-100439) filed on June 16, 2021.

REFERENCE SIGNS LIST

11: additive manufacturing apparatus
13: impurity removal apparatus
15: surface measurement unit
17: controller
19: torch
21: welding robot
23: filler metal feeding unit
25: power supply unit
27: base material
27a: base material surface
31: general-purpose robot
33: tip arm
35: removal tool
41: welding control unit
43: determination unit
45: impurity removal control unit
B: weld bead
M: filler metal
100: additive manufacturing system

**Claims**

1.  An additive manufacturing method for producing a manufactured object by depositing weld beads formed by melting and solidifying a filler metal, the method comprising:

    a bead formation process of forming a bead layer in which the weld beads are arranged,
    an impurity identification process of identifying a region where an impurity is generated on a surface of the bead layer formed in the bead formation process, and
    a thickness estimation process of estimating a thickness of the impurity in the region identified in the impurity identification process; wherein
    the bead formation process, the impurity identification process and the thickness estimation process are repeatedly performed, and
    a removal process, in which the impurity is removed from the surface of the bead layer, is selectively performed after performing the thickness estimation process based on the estimated thickness of the impurity.

2.  The additive manufacturing method according to claim 1, wherein
    in the impurity identification process, the surface of the bead layer is imaged, and the region of the impurity generated on the surface of the bead layer is identified based on the obtained imaged information.

3.  The additive manufacturing method according to claim 1, wherein
    in the thickness estimation process, the thickness of the impurity is estimated based on history information including

    an area of the impurity on the surface of the bead layer identified in the impurity identification process, and
    the number of the bead layers formed in the bead formation process.

4.  The additive manufacturing method according to claim 2, wherein
    in the thickness estimation process, a thickness of the impurity is estimated based on history information including

    an area of the impurity on the surface of the bead layer identified in the impurity identification process, and

the number of the bead layers formed in the bead formation process.

5. The additive manufacturing method according to claim 3, wherein
a thickness $t_i$ of the impurity in an i-th layer in the middle of depositing is estimated by $t_i = \alpha_i \times t_k$ using a thickness $t_k$ of the impurity in a k-th layer as a reference and a ratio $\alpha_i$, where i is an integer of 2 or more and k is an integer of 1 or more.

6. The additive manufacturing method according to claim 4, wherein
a thickness $t_i$ of the impurity in an i-th layer in the middle of depositing is estimated by $t_i = \alpha_i \times t_k$ using a thickness $t_k$ of the impurity in a k-th layer as a reference and a ratio $\alpha_i$, where i is an integer of 2 or more and k is an integer of 1 or more.

7. The additive manufacturing method according to any one of claims 3 to 6, further comprising:

a process of calculating a remaining area of the impurity remaining on the surface of the bead layer after the removal process, wherein
in the thickness estimation process, a thickness of the impurity in a layer next to the layer subjected to the removal process is estimated based on the history information including the remaining area of the impurity.

8. The additive manufacturing method according to claim 7, wherein
in the process of obtaining the remaining area of the impurity, the surface of the bead layer is imaged after the removal process, and the remaining area is obtained based on the obtained imaged information.

9. The additive manufacturing method according to any one of claims 1 to 6, wherein
after the thickness estimation process, the thickness of the impurity is compared with a predetermined threshold, and in a case where the thickness of the impurity is less than the threshold, the bead formation process is performed, and in a case where the thickness of the impurity is equal to or greater than the threshold, the removal process is performed.

10. The additive manufacturing method according to claim 7, wherein
after the thickness estimation process, the thickness of the impurity is compared with a predetermined threshold, and in a case where the thickness of the impurity is less than the threshold, the bead formation process is performed, and in a case where the thickness of the impurity is equal to or greater than the threshold, the removal process is performed.

11. The additive manufacturing method according to claim 8, wherein
after the thickness estimation process, the thickness of the impurity is compared with a predetermined threshold, and in a case where the thickness of the impurity is less than the threshold, the bead formation process is performed, and in a case where the thickness of the impurity is equal to or greater than the threshold, the removal process is performed.

12. The additive manufacturing method according to any one of claims 1 to 6, wherein
the impurity includes slag.

13. The additive manufacturing method according to claim 7, wherein
the impurity includes slag.

14. The additive manufacturing method according to claim 8, wherein
the impurity includes slag.

15. The additive manufacturing method according to claim 9, wherein
the impurity includes slag.

**Patentansprüche**

1. Additives Herstellungsverfahren zur Herstellung eines gefertigten Objekts durch Abscheiden von Schweißraupen, die durch Schmelzen und Erstarren eines Füllmetalls gebildet werden, wobei das Verfahren umfasst:

einen Raupenbildungsprozess des Bildens einer Raupenschicht, in dem die Schweißraupen angeordnet werden,
einen Verunreinigungsidentifizierungsprozess des Identifizierens eines Bereichs, in dem eine Verunreinigung auf einer Oberfläche der im Raupenbildungsprozess gebildeten Raupenschicht erzeugt wird, und

einen Dickenschätzprozess zum Schätzen einer Dicke der Verunreinigung in dem im Verunreinigungsidentifizierungsprozess identifizierten Bereich; wobei

der Raupenbildungsprozess, der Verunreinigungsidentifizierungsprozess und der Dickenschätzungsprozess wiederholt durchgeführt werden, und

ein Entfernungsprozess, bei dem die Verunreinigung von der Oberfläche der Raupenschicht entfernt wird, selektiv durchgeführt wird, nachdem der Dickenschätzprozess basierend auf der geschätzten Dicke der Verunreinigung durchgeführt worden ist.

2. Additives Herstellungsverfahren nach Anspruch 1, wobei im Verunreinigungsidentifizierungsprozess die Oberfläche der Raupenschicht abgebildet wird und der Bereich der auf der Oberfläche der Raupenschicht erzeugten Verunreinigung basierend auf den erhaltenen abgebildeten Informationen identifiziert wird.

3. Additives Herstellungsverfahren nach Anspruch 1, wobei im Dickenschätzungsprozess die Dicke der Verunreinigung geschätzt wird basierend auf Verlaufsinformationen, einschließlich eines Bereichs der Verunreinigung auf der Oberfläche der Raupenschicht, die im Verunreinigungsidentifizierungsprozess identifiziert wurde, und der Anzahl der Raupenschichten, die im Raupenbildungsprozess gebildet wurden.

4. Additives Herstellungsverfahren nach Anspruch 2, wobei im Dickenschätzungsprozess eine Dicke der Verunreinigung geschätzt wird basierend auf Verlaufsinformationen, einschließlich eines Bereichs der Verunreinigung auf der Oberfläche der Raupenschicht, die im Verunreinigungsidentifizierungsprozess identifiziert wurde, und der Anzahl der Raupenschichten, die in dem Raupenbildungsprozess gebildet wurden.

5. Additives Herstellungsverfahren nach Anspruch 3, wobei eine Dicke $t_i$ der Verunreinigung in einer i-ten Schicht in der Mitte des Abscheidens durch $t_i = \alpha_i \times t_k$ geschätzt wird, wobei eine Dicke $t_k$ der Verunreinigung in einer k-ten Schicht als Referenz und ein Verhältnis $\alpha_i$ verwendet werden, wobei i eine ganze Zahl von 2 oder mehr und k eine ganze Zahl von 1 oder mehr ist.

6. Additives Herstellungsverfahren nach Anspruch 4, wobei eine Dicke $t_i$ der Verunreinigung in einer i-ten Schicht in der Mitte des Abscheidens durch $t_i = \alpha_i \times t_k$ geschätzt wird, wobei eine Dicke $t_k$ der Verunreinigung in einer k-ten Schicht als Referenz und ein Verhältnis $\alpha_i$ verwendet werden, wobei i eine ganze Zahl von 2 oder mehr und k eine ganze Zahl von 1 oder mehr ist.

7. Additives Herstellungsverfahren nach einem der Ansprüche 3 bis 6, weiter umfassend:

einen Prozess zum Berechnen einer verbleibenden Fläche der Verunreinigung, die nach dem Entfernungsprozess auf der Oberfläche der Raupenschicht verbleibt, wobei
im Dickenschätzprozess eine Dicke der Verunreinigung in einer Schicht neben der dem Entfernungsprozess unterzogenen Schicht basierend auf den Verlaufsinformationen einschließlich der verbleibenden Fläche der Verunreinigung geschätzt wird.

8. Additives Herstellungsverfahren nach Anspruch 7, wobei im Prozess des Erhaltens des verbleibenden Bereichs der Verunreinigung die Oberfläche der Raupenschicht nach dem Entfernungsprozess abgebildet wird und der verbleibende Bereich basierend auf den erhaltenen abgebildeten Informationen erhalten wird.

9. Additives Herstellungsverfahren nach einem der Ansprüche 1 bis 6, wobei nach dem Dickenschätzprozess die Dicke der Verunreinigung mit einem vorgegebenen Schwellenwert verglichen wird, und in einem Fall, wenn die Dicke der Verunreinigung kleiner als der Schwellenwert ist, der Raupenbildungsprozess durchgeführt wird, und wenn die Dicke der Verunreinigung gleich oder größer als der Schwellenwert ist, der Entfernungsprozess durchgeführt wird.

10. Additives Herstellungsverfahren nach Anspruch 7, wobei nach dem Dickenschätzprozess die Dicke der Verunreinigung mit einem vorgegebenen Schwellenwert verglichen wird und in einem Fall, wenn die Dicke der Verunreinigung geringer als der Schwellenwert ist, der Raupenbildungsprozess durchgeführt wird und in einem Fall, wenn die Dicke der Verunreinigung gleich oder größer als der Schwellenwert ist, der Entfernungsprozess durchgeführt wird.

11. Additives Herstellungsverfahren nach Anspruch 8, wobei nach dem Dickenschätzprozess die Dicke der Verunreinigung mit einem vorgegebenen Schwellenwert verglichen wird und in einem Fall, in dem die Dicke der Verunreinigung geringer als der Schwellenwert ist, der Raupbildungsprozess durchgeführt wird und in einem Fall, in dem die Dicke der Verunreinigung gleich oder größer als der Schwellenwert ist, der Entfernungsprozess durchgeführt wird.

**12.** Additives Herstellungsverfahren nach einem der Ansprüche 1 bis 6, wobei die Verunreinigung Schlacke umfasst.

**13.** Additives Herstellungsverfahren nach Anspruch 7, wobei die Verunreinigung Schlacke umfasst.

**14.** Additives Herstellungsverfahren nach Anspruch 8, wobei die Verunreinigung Schlacke umfasst.

**15.** Additives Herstellungsverfahren nach Anspruch 9, wobei die Verunreinigung Schlacke umfasst.


**Revendications**

**1.** Procédé de fabrication additive pour produire un objet fabriqué en déposant des cordons de soudure formés en faisant fondre et solidifiant un métal d'apport, le procédé comprenant :

un processus de formation de cordon consistant à former une couche de cordon dans laquelle les cordons de soudure sont agencés,
un processus d'identification d'impureté consistant à identifier une région où une impureté est générée sur une surface de la couche de cordon formée dans le processus de formation de cordon, et
un processus d'estimation d'épaisseur consistant à estimer une épaisseur de l'impureté dans la région identifiée dans le processus d'identification d'impureté ; dans lequel
le processus de formation de cordon, le processus d'identification d'impureté et le processus d'estimation d'épaisseur sont réalisés de manière répétée, et
un processus d'élimination dans lequel l'impureté est éliminée de la surface de la couche de cordon est réalisé de manière sélective après réalisation du processus d'estimation d'épaisseur en fonction de l'épaisseur estimée de l'impureté.

**2.** Procédé de fabrication additive selon la revendication 1, dans lequel
dans le processus d'identification d'impureté, la surface de la couche de cordon est imagée, et la région de l'impureté générée sur la surface de la couche de cordon est identifiée en fonction des informations imagées obtenues.

**3.** Procédé de fabrication additive selon la revendication 1, dans lequel

dans le processus d'estimation d'épaisseur, l'épaisseur de l'impureté est estimée en fonction d'informations historiques incluant
une zone de l'impureté sur la surface de la couche de cordon identifiée dans le processus d'identification d'impureté, et
le nombre des couches de cordon formées dans le processus de formation de cordon.

**4.** Procédé de fabrication additive selon la revendication 2, dans lequel

dans le processus d'estimation d'épaisseur, une épaisseur de l'impureté est estimée en fonction d'informations historiques incluant
une zone de l'impureté sur la surface de la couche de cordon identifiée dans le processus d'identification d'impureté, et
le nombre des couches de cordon formées dans le processus de formation de cordon.

**5.** Procédé de fabrication additive selon la revendication 3, dans lequel
une épaisseur $t_i$ de l'impureté dans une $i^e$ couche au milieu du dépôt est estimée par $t_i = \alpha_i \times t_k$ en utilisant une épaisseur $t_k$ de l'impureté dans une $k^e$ couche en tant que référence et un rapport $\alpha_i$, où i est un entier de 2 ou plus et k est un entier de 1 ou plus.

**6.** Procédé de fabrication additive selon la revendication 4, dans lequel
une épaisseur $t_i$ de l'impureté dans une $i^e$ couche au milieu du dépôt est estimée par $t_i = \alpha_i \times t_k$ en utilisant une épaisseur $t_k$ de l'impureté dans une $k^e$ couche en tant que référence et un rapport $\alpha_i$, où i est un entier de 2 ou plus et k est un entier de 1 ou plus.

**7.** Procédé de fabrication additive selon l'une quelconque des revendications 3 à 6, comprenant en outre :

un processus de calcul d'une zone restante de l'impureté restant sur la surface de la couche de cordon après le processus d'élimination, dans lequel

dans le processus d'estimation d'épaisseur, une épaisseur de l'impureté dans une couche à côté de la couche soumise au processus d'élimination est estimée en fonction des informations historiques incluant la zone restante de l'impureté.

8. Procédé de fabrication additive selon la revendication 7, dans lequel
dans le processus d'obtention de la zone restante de l'impureté, la surface de la couche de cordon est imagée après le processus d'élimination, et la zone restante est obtenue en fonction des informations imagées obtenues.

9. Procédé de fabrication additive selon l'une quelconque des revendications 1 à 6, dans lequel
après le processus d'estimation d'épaisseur, l'épaisseur de l'impureté est comparée à un seuil prédéterminé, et dans un cas où l'épaisseur de l'impureté est inférieure au seuil, le processus de formation de cordon est réalisé, et dans un cas où l'épaisseur de l'impureté est supérieure ou égale au seuil, le processus d'élimination est réalisé.

10. Procédé de fabrication additive selon la revendication 7, dans lequel
après le processus d'estimation d'épaisseur, l'épaisseur de l'impureté est comparée à un seuil prédéterminé, et dans un cas où l'épaisseur de l'impureté est inférieure au seuil, le processus de formation de cordon est réalisé, et dans un cas où l'épaisseur de l'impureté est supérieure ou égale au seuil, le processus d'élimination est réalisé.

11. Procédé de fabrication additive selon la revendication 8, dans lequel
après le processus d'estimation d'épaisseur, l'épaisseur de l'impureté est comparée à un seuil prédéterminé, et dans un cas où l'épaisseur de l'impureté est inférieure au seuil, le processus de formation de cordon est réalisé, et dans un cas où l'épaisseur de l'impureté est supérieure ou égale au seuil, le processus d'élimination est réalisé.

12. Procédé de fabrication additive selon l'une quelconque des revendications 1 à 6, dans lequel
l'impureté inclut du laitier.

13. Procédé de fabrication additive selon la revendication 7, dans lequel
l'impureté inclut du laitier.

14. Procédé de fabrication additive selon la revendication 8, dans lequel
l'impureté inclut du laitier.

15. Procédé de fabrication additive selon la revendication 9, dans lequel
l'impureté inclut du laitier.

FIG. 1

*FIG. 2*

17

CONTROLLER

41

WELDING CONTROL UNIT

43

DETERMINATION UNIT ← SURFACE MEASUREMENT UNIT

45

IMPURITY REMOVAL CONTROL UNIT

*FIG. 3*

START
→ FORM WELD BEAD — S1
→ IMAGE BEAD SURFACE — S2
→ PERFORM IMAGE PROCESSING ON IMAGED IMAGE — S3
→ CALCULATE AREA RATIO OF IMPURITY — S4
→ ESTIMATE THICKNESS OF IMPURITY — S5
→ THICKNESS OF IMPURITY IS LESS THAN THRESHOLD? — S6
NO → REMOVE IMPURITY — S8 → CONFIRM REMAINING IMPURITY — S9
YES → FORM WELD BEAD IN NEXT LAYER — S7
→ END

*FIG. 4*

| | IMAGE | BINARIZED IMAGE | AREA RATIO |
|---|---|---|---|
| SECOND LAYER | SECOND LAYER | | 60.6% |
| THIRD LAYER | THIRD LAYER | | 74.9% |
| FOURTH LAYER | FOURTH LAYER | | 85.1% |
| FIFTH LAYER | FIFTH LAYER | | 89.2% |

FIG. 5

EP 4 335 580 B1

**EP 4 335 580 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019084553 A
- JP S60121094 A
- JP 2021100439 A